# EUROPEAN PATENT APPLICATION

(11) **EP 3 260 683 A1**
(43) Date of publication of application: **27.12.2017**
(21) Application number: 17176927.6
(22) Date of filing: 20.06.2017
(51) Int. Cl.: F02C 3/30

(54) **SYSTEMS AND METHODS FOR VARIABLE WATER INJECTION FLOW CONTROL**

(30) Priority: 22.06.2016 US 201615189565
(71) Applicant: General Electric Company, Schenectady, NY 12345 (US)
(72) Inventor: LALA, Mayur Kumar, 500081 Madhapur, Ahndra Pradesh (IN); SCHMITT, Thomas Patrick, Billerica, MA Massachusetts 01821 (US); OJHA, Rajiv Kumar, 500081 Madhapur, Ahndra Pradesh (IN)
(74) Representative: Foster, Christopher Michael

(57) **Abstract**

Embodiments of the disclosure can include systems (100,200) and methods (300) for variable water injection flow control. For example, an operator of a gas turbine system (100,200) may be enabled to adjust a water injection flow rate (and/or an inlet guide vein (IGV) and/or a firing temperature) of the gas turbine system (100,200) to optimize performance during current conditions. In one embodiment, a provided method (300) can include: receiving (302) a water injection flow reference (120) comprising one or more conditions of the gas turbine system (100,200); receiving (304) water injection flow data from a sensor (130) monitoring the gas turbine system (100,200); calculating (306) a water injection flow rate value that characterizes one or more conditions based at least in part on the water injection flow reference (120) and the water injection flow data; and adjusting (308) a water injection flow rate of the gas turbine system (100,200) to the calculated water injection flow rate value.

## Description

### TECHNICAL FIELD

The disclosure relates to gas turbines, and more particularly to systems and methods for variable water injection flow control.

### BACKGROUND

A gas turbine system may be operated to generate electrical power for distribution across a power grid. During operation of the gas turbine system, water may be injected into the gas turbine system to control power output and fuel efficiency, as well as reduce potentially harmful emissions. However, water injection rates are typically controlled by pre-programmed automatic control system algorithms that may not be optimized for all operating conditions. As such, an operator of the gas turbine system may have little to no control over water injection rates.

### BRIEF SUMMARY OF THE DISCLOSURE

Embodiments of the disclosure may include systems and methods for variable water injection flow control. Certain embodiments of the disclosure can facilitate operating a variable water injection flow system. According to one embodiment of the disclosure, a method can include: receiving a water injection flow reference comprising one or more conditions of the gas turbine system; receiving water injection flow data from a sensor monitoring the gas turbine system; calculating a water injection flow rate value that optimizes one or more conditions based at least in part on the water injection flow reference and the water injection flow data; and adjusting a water injection flow rate of the gas turbine system to the calculated water injection flow rate value.

According to another embodiment of the disclosure, a system can include a combustion section; and a water injection valve coupled to the combustion section. The system can also include a processor with computer-executable instructions. The computer-executable instructions can be operable to: receive a water injection flow reference comprising one or more conditions of the gas turbine system; receive water injection flow data from a sensor monitoring the gas turbine system; calculate a water injection flow rate value that optimizes one or more conditions based at least in part on the water injection flow reference and the water injection flow data; and adjust a water injection flow rate of the gas turbine system to the calculated water injection flow rate value.

Further, according to another embodiment of the disclosure, one or more computer-readable media can store computer-executable instructions that can be executed by at least one processor. The computer-executable instructions can be operable for: receiving a water injection flow reference comprising one or more conditions of the gas turbine system; receiving water injection flow data from a sensor monitoring the gas turbine system; calculating a water injection flow rate value that optimizes one or more conditions based at least in part on the water injection flow reference and the water injection flow data; and adjusting a water injection flow rate of the gas turbine system to the calculated water injection flow rate value.

Other embodiments, systems, methods, apparatus aspects, and features of the disclosure will become apparent from the following detailed description, the accompanying drawings, and the appended claims.

### BRIEF DESCRIPTION OF THE FIGURES

The detailed description is set forth with reference to the accompanying drawings, which are not necessarily drawn to scale. The use of the same reference numbers in different figures indicates similar or identical items.
FIG. 1 depicts an example system environment for a conventional water injection flow control system, according to one embodiment of the disclosure.
FIG. 2 is an example system environment for a variable water injection flow control system, according to one embodiment of the disclosure.
FIG. 3 is a flow diagram illustrating details of an example method of operating a variable water injection flow control system, according to one embodiment of the disclosure.
FIG. 4 is a block diagram of an example computing environment of a variable water injection flow control system, according to one embodiment of the disclosure.

### DETAILED DESCRIPTION

Illustrative embodiments will now be described more fully hereinafter with reference to the accompanying drawings, in which some, but not all embodiments of the disclosure are shown. The disclosure may be embodied in many different forms and should not be construed as limited to the embodiments set forth herein; rather, these embodiments are provided so that this disclosure will satisfy applicable legal requirements. As noted above, like numbers refer to like elements throughout.

Illustrative embodiments of the disclosure are directed to, among other things, integration of one or more variable water injection controls into a gas turbine system. As used herein, water injection refers to the addition of water, steam (e.g., water vapor), and/or another liquid and/or gas such as a coolant mixture) to a combustion section of a heavy duty gas turbine system designed to generate electric power.

During liquid fuel operation of the gas turbine system, water and/or steam injection may be used to control emissions of gases, such as Nitric Oxide (NOx). Introduction of water and/or steam into the gas turbine system may also affect output and/or efficiency of the gas turbine system. For example, injecting a large amount of water may increase output of the gas turbine system while lowering its efficiency. Additionally, other types of fuel, such as natural gas, may be utilized to power the gas turbine system. For example, water and/or steam may be injected into a gas turbine system that bums natural gas for fuel.

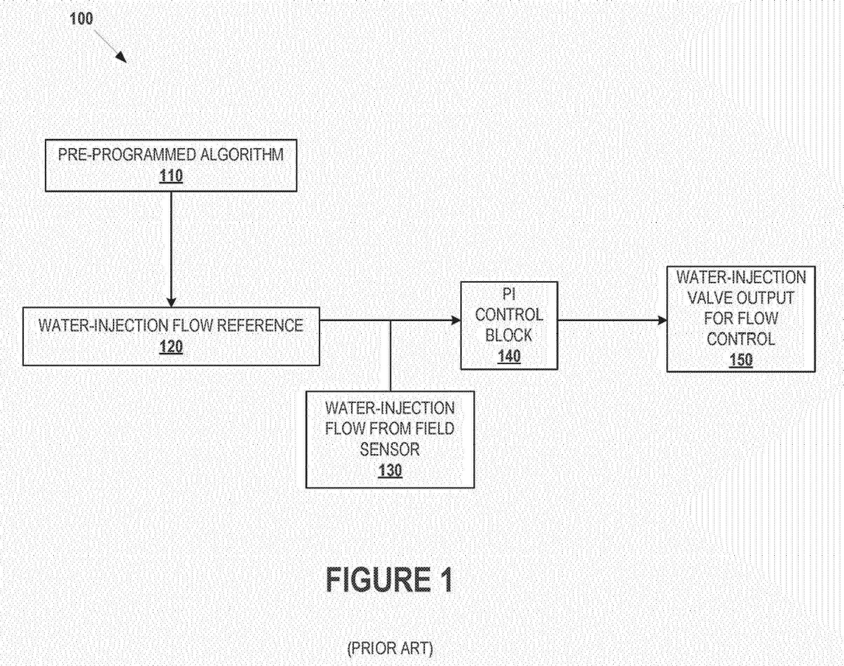

Conventionally, and as depicted in FIG. 1, water injection is controlled by one or more pre-programmed algorithms 110 that regulate a water injection flow rate. The pre-programmed algorithms may be determined offsite during initial design phases of the turbine and may not reflect optimal conditions that persist at time of actual operations. In some embodiments, the water injection flow rate is based at least in part on a rate of fuel flowing into the gas turbine system such that a water-to-fuel ratio follows a predetermined behavior that results in sustaining and/or maintaining a nearly-constant rate of emissions across a load range and/or ambient range. In some embodiments, the water-to-fuel ratio may be governing operation of the turbine at approximately 35% load and/or above.

Typically, emissions are constrained by the one or more pre-programmed algorithms 110 such that the emissions adhere to contractual emissions requirements of a supplier of the gas turbine system. However, the contractual emissions requirements of the supplier may or may not coincide with emissions requirements imposed on the gas turbine system by local regulating authorities (e.g., a government local to the location of the gas turbine system). For example, a gas turbine system supplied by a North American and/or European supplier may include pre-programmed algorithms 110 defining a more stringent set of emissions constraints than those imposed by a Middle Eastern and/or Asian nation in which the gas turbine system is to be installed and/or operated.

In embodiments where emissions requirements are less restrictive at a location of the gas turbine system, a variable water injection flow control system as disclosed herein can enable an onsite operator of the gas turbine system to adjust water injection rates to optimize performance of the gas turbine system (e.g., its output, efficiency, and/or emissions) based on conditions that exist at the location of the gas turbine system. By moving control of water injection rates into the gas turbine system into the domain of the onsite operator, the gas turbine system can realize higher performance levels, which may in turn lead to higher profits based on its ability to be optimally adjusted based on conditions that exist at the location of the gas turbine at any moment in time.

As depicted in system environment 100 of FIG. 1, a traditional water injection flow control system typically adjusts water injection rates based on one or more pre-programmed algorithms 110. The one or more pre-programmed algorithms 110 may have been defined based on one or more conditions (e.g., output, efficiency, emissions, power grid load demand, grid frequency, condition of equipment in the gas turbine system and/or other gas turbine systems, temperature, time of day, day of week, location, and/or the like) within which the gas turbine system is to operate.

The one or more pre-programmed algorithms 110 can be utilized to calculate a water injection flow reference 120, which typically includes a water injection flow rate based on the one or more pre-programmed algorithms 110 (and/or one or more conditions included in the one or more pre-programmed algorithms 110). The water injection flow reference 120, along with a water injection flow from a field sensor 130, is received by a control block 140. The control block 140 typically receives the water injection flow reference 120 and the water injection flow from the field sensor 130 and utilizes each to control a water injection valve output (and/or other means of control, such as a variable speed injection pump) for flow control 150. In this way, the control block 140 receives instructions for controlling the water injection flow rate (e.g., the water injection flow reference 120, which is based on the one or more pre-programmed algorithms 110), receives actual water injection flow information from the field sensor 130, and processes the received instructions and/or information to control the water injection valve output for flow control 150.

The water injection valve output for flow control 150 typically controls the amount of water being injected into the combustion section of the gas turbine system. In some embodiments, the water injection valve output for flow control 150 may adjust a degree at which the valves are opened and/or closed so as to restrict and/or increase the flow rate of water injection.

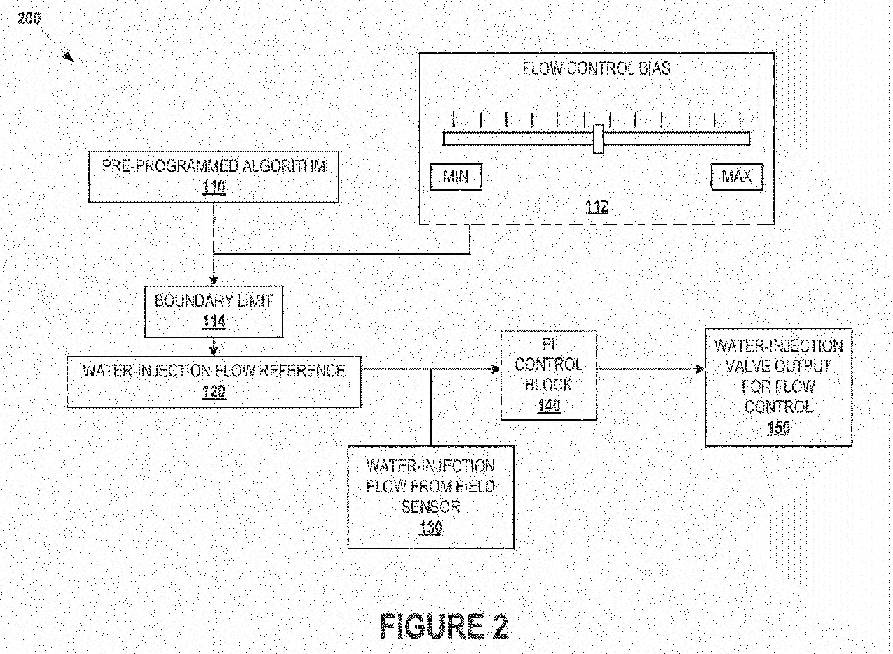

As depicted in FIG. 2, and in accordance with embodiments of the present disclosure, a variable flow control slider 112 is incorporated into system environment 200. The variable flow control slider 112 may be utilized by the onsite operator of the gas turbine system to adjust the water injection flow to optimal levels of performance as described above. In this manner, variable control of water injection can be provided to the onsite operator of the gas turbine system. For example, the onsite operator may be able to adjust the water injection flow rate to meet needs of a particular moment (e.g., to optimize output, efficiency, emissions, and/or the like).

In system environment 200, the one or more pre-programmed algorithms 110 are typically still utilized to create the water injection flow reference 120. In this manner, the one or more pre-programmed algorithms 110 may serve as a baseline schedule of operation parameters and/or conditions within which the gas turbine is to operate. For example, the one or more pre-programmed algorithms 110 may define an allowable range of values for one or more conditions and/or operation parameters of the gas turbine system. In some embodiments, the one or more pre-programmed algorithms 110 may define one or more minimum and/or maximum values and/or a range of values (e.g., a boundary limit 114) for one or more conditions and/or operation parameters of the gas turbine system. In this way, the one or more pre-programmed algorithms 110 can allow for one or more conditions and/or operation parameters of the gas turbine system (e.g., a water injection flow rate) to be adjusted within a predetermined range while ensuring that one or more conditions and/or operation parameters of the gas turbine system (e.g., a water injection flow rate) are not adjusted outside the predetermined range and/or minimum and/or maximum constraints, such as exceeding an absolute upper limit beyond physical capacities of the gas turbine system. Furthermore, by enabling adjusting of one or more conditions and/or operation parameters of the gas turbine system (e.g., a water injection flow rate), one or more conditions and/or operation parameters of the gas turbine system may be optimized based on conditions existing at the location of the gas turbine system at any given point in time.

In some embodiments, the water injection flow rate may be variable within a predetermined range of values defined by a minimum water injection flow rate value and/or a maximum water injection flow rate value. The minimum and/or maximum water injection flow rate values may be defined by emissions regulations of a particular location (e.g., the location in which the gas turbine system is installed and/or is operating), desired output levels, efficiency levels, and/or safety levels, and/or the like.

In some embodiments, the minimum and/or maximum water injection flow rate values may be static. For example, a minimum and/or maximum water injection flow rate value may correspond to a non-changing upper limit of a water injection flow rate at which the gas turbine system can no longer operate without causing physical damage to the gas turbine system. As another example, a minimum water injection flow rate value may correspond to a non-changing lower limit of a water injection flow rate at which the gas turbine system produces an amount of emissions that exceeds an allowable threshold amount of emissions based on environmental and/or governmental restrictions.

In other embodiments, the minimum and/or maximum water injection flow rate values may be dynamic. For example, minimum and/or maximum water injection flow rate values may correspond to a lower and/or upper limits that change based on conditions that exist at the gas turbine system such as time of day, temperature, day of the week, grid demands, desired output and/or power production, efficiency, emissions, and/or the like. As such, the minimum and/or maximum water injection flow rate values may define a range of acceptable water injection flow rate values that are accessible by the onsite operator during adjustments. The range of acceptable water injection flow rate values may also be based on combustion stability, hot gas path life requirements, accessory systems functionality, and/or the like. Further, minimum and/or maximum water injection flow rate values may calculated based on one or more conditions existing at the gas turbine system, historical data of operation of the gas turbine system, and/or the like.

As stated above, adjusting the water injection flow rate may provide many benefits to the gas turbine system. For example, decreasing the water injection flow rate may increase efficiency of the gas turbine system. Conversely, decreasing the water injection flow rate may, in some embodiments, decrease output and/or increase efficiency (based at least in part on additional power consumed and/or required for increasing the injection flow rate, emissions may be optimized (e.g., decreased). In this manner, the gas turbine system may be enabled to produce more profit and/or reduce its environmental impact depending on its variable water injection flow rate. In some embodiments, a variable water injection flow rate may increase efficiency up to approximately 1.2% and may increase output up to approximately 3%.

Adjusting the water injection flow rate may affect one or more conditions and/or the performance of the gas turbine system. For example, an increased water injection flow rate may degrade a heat rate and/or thermodynamic efficiency. Improper control valve function associated with a valve that injects the water into the combustion section of the gas turbine section may lead to lean blow out (LBO). Therefore, if the water injection flow rate is increased too far (e.g., meets and/or exceeds a predetermined maximum value), or if a malfunction of the gas turbine system is detected, the gas turbine system may be shut off automatically.

In some embodiments, an adjustment of the variable water injection flow rate may be scheduled for a predetermined period of time. For example, the operator may be enabled to configure the water injection flow rate to adjust to one or more predetermined flow rates at one or more predetermined times, dates, and/or for a predetermined period of time. In some embodiments, an adjustment of the water injection flow rate lasts for a predetermined period of time and resets after the predetermined period of time expires, or, alternatively, indefinitely (e.g., until a second adjustment to the water injection flow rate is made).

In some embodiments, a recommendation for an adjustment to the water injection flow rate may be provided based on one or more conditions. The recommendation may be provided such that one or more conditions are optimized. The recommendation may emanate from an offsite performance monitoring and/or advisory system that uses real-time data from the gas turbine system and real-time data from the overall power grid system (e.g., a load requirement, fuel availability, and/or the like) to advise the operator of an optimum water injection flow rate. For example, the control block 140 may recommend adjusting the water injection flow rate to a particular flow rate value so as to optimize output of the gas turbine system. In some embodiments, the recommendation may be based on a water injection flow rate value that is calculated based on one or more conditions that exist at the gas turbine system at a given moment in time, or for a forecasted predetermined period of time.

Additionally, one or more other conditions and/or performance aspects of the gas turbine system may be variable and/or adjusted by one or more other sliders. For example, a firing temperature may be adjusted by a second slider. The firing temperature typically refers to a temperature inside the combustion portion of the gas turbine system. Varying the firing temperature may affect output, efficiency, and/or emissions of the gas turbine system. For example, increasing the firing temperature may increase output of the gas turbine system.

As another example, an inlet guide vein (IGV) may be adjusted by a third slider. The IGV comprises a plurality of flaps that are positioned at a front end (e.g., an intake) of the compressor portion of the gas turbine system. These flaps may be opened and/or closed (or partially opened/closed) to control air flow as air passes through the flaps and flows into rotating blades of the gas turbine system. An angle of the IGV flaps may be variably adjusted to control and/or regulate power (e.g., output, efficiency, and/or emissions) of the gas turbine system.

Adjustment of one or more of these sliders may affect other values. For example, when adjusting a water injection flow rate to optimize output, a firing temperature value and/or a IGV flap angle value may be adjusted as well. As such, each recommendation for one slider value may also include recommended and/or calculated optimal slider values for other sliders, conditions, and/or performance aspects of the gas turbine system.

Each slider may be presented to the operator of the gas turbine system using a human-computer interface. The interface may include a display for displaying calculated and/or recommended adjustments of one or more sliders based on one or more conditions and/or desired performance characteristics of the gas turbine system. In some embodiments, this information is updated and/or presented in real time.

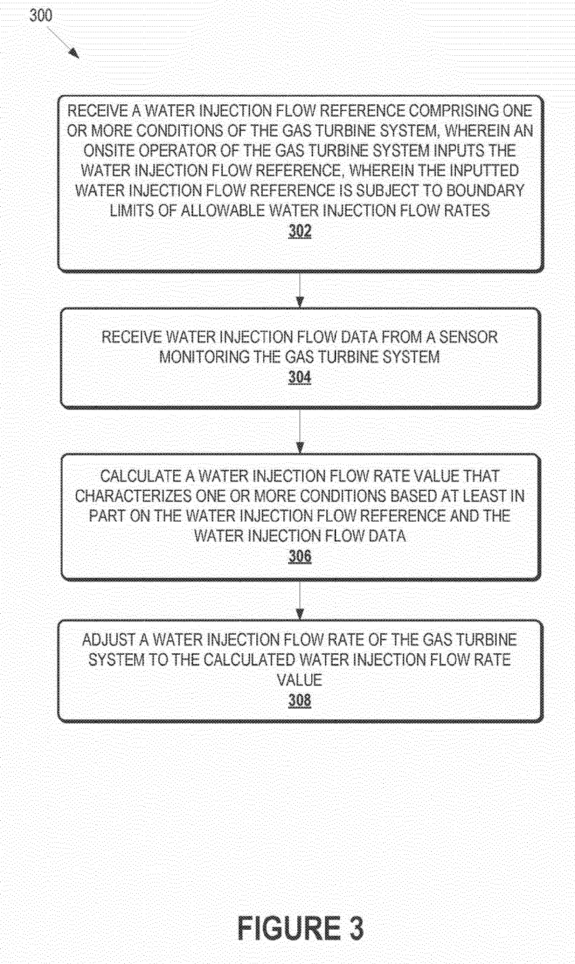

FIG. 3 is a flow diagram illustrating details of an example method 300 for operating a variable water injection flow control system, according to one embodiment of the disclosure. At block 302, the method 300 can include receiving a water injection flow reference comprising one or more conditions of the gas turbine system, wherein an onsite operator of the gas turbine system inputs the water injection flow reference, wherein the inputted water injection flow reference is subject to boundary limits of allowable water injection flow rates. At block 304, the method 300 can include receiving water injection flow data from a sensor. At block 306, the method 300 can include calculating a water injection flow rate value that optimizes one or more conditions based at least in part on the water injection flow reference and the water injection flow data. At block 308, the method 300 can include adjusting a water injection flow rate of the gas turbine system to the calculated water injection flow rate value.

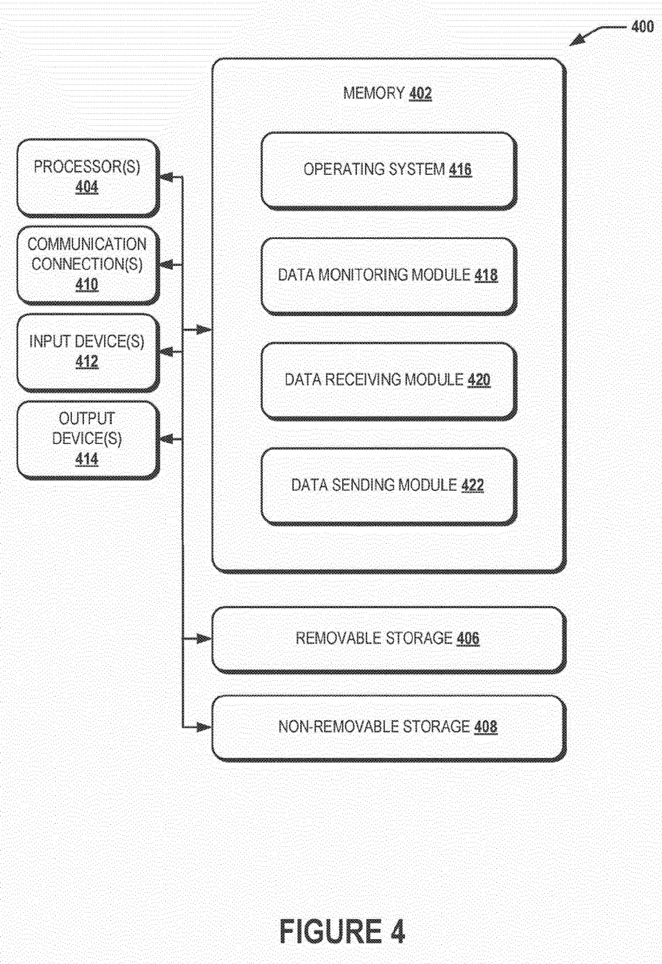

FIG. 4 is a block diagram of an example computing environment 400 for a variable water injection flow control system, according to one embodiment of the disclosure. The computing environment 400 can include one or more devices (e.g., a gas turbine system comprising at least a combustion portion, a control block 140, a water injection valve output, a water injection flow field sensor, IGV flaps, and/or the like) which can include a processor 404 capable of communicating with a memory 402. The processor 404 may be implemented as appropriate in hardware, software, firmware, or combinations thereof. Software or firmware implementations of the processor 404 may include computer-executable or machine-executable instructions written in any suitable programming language to perform the various functions described.

A memory 402 can store program instructions that are loadable and executable on the processor 404, as well as data generated during the execution of these programs. Depending on the configuration and type of computing environment 400, a memory 402 may be volatile (such as random access memory (RAM)) and/or non-volatile (such as read-only memory (ROM), flash memory, etc.). In some embodiments, the devices may also include additional removable storage 406 and/or non-removable storage 408 including, but not limited to, magnetic storage, optical disks, and/or tape storage. The disk drives and their associated computer-readable media may provide non-volatile storage of computer-readable instructions, data structures, program modules, and other data for the devices. In some implementations, the memory 402 may include multiple different types of memory, such as static random access memory (SRAM), dynamic random access memory (DRAM), or ROM.

The memory 402, removable storage 406, and non-removable storage 408 are all examples of computer-readable storage media. For example, computer-readable storage media may include volatile and non-volatile, removable and non-removable media implemented in any method or technology for storage of information such as computer-readable instructions, data structures, program modules or other data. Additional types of computer storage media that may be present include, but are not limited to, programmable random access memory (PRAM), SRAM, DRAM, RAM, ROM, electrically erasable programmable read-only memory (EEPROM), flash memory or other memory technology, compact disc read-only memory (CD-ROM), digital versatile discs (DVD) or other optical storage, magnetic cassettes, magnetic tapes, magnetic disk storage or other magnetic storage devices, or any other medium which can be used to store the desired information and which can be accessed by the devices. Combinations of any of the above should also be included within the scope of computer-readable media.

The computing environment 400 may also contain one or more communication connections 410 that allow the devices to communicate with devices or equipment capable of communicating with a computing device. The connections can be established via various data communication channels or ports, such as USB or COM ports to receive connections for cables connecting the devices, e.g., control devices, to various other devices in a system. Devices in system environments 100, 200 can include communication drivers such as Ethernet drivers that enable the devices to communicate with other devices in system environments 100, 200. According to various embodiments, the connections 410 may be established via a wired and/or wireless connection in system environments 100, 200. The computing environment 400 may also include one or more input devices 412, such as a keyboard, mouse, pen, voice input device, and touch input device. It may also include one or more output devices 414, such as a display, printer, and speakers.

In other embodiments, however, computer-readable communication media may include computer-readable instructions, program modules, or other data transmitted within a data signal, such as a carrier wave, or other transmission. As used herein, however, computer-readable storage media does not include computer-readable communication media.

Turning to the contents of the memory 402, the memory 402 can include, but is not limited to, an operating system (OS) 416 and one or more application programs or services for implementing the features and aspects disclosed herein. Such application or services can include a data monitoring module 418, a data receiving module 420, and a data sending module 422. In one embodiment, the modules 418, 420, and 422 can be implemented by software that is provided in configurable control block language and is stored in non-volatile memory.

In one embodiment, the OS 416 can include a QNX® real-time, multitasking operating system. The data monitoring module 418 can monitor multiple devices for data in system environments 100, 200. In one embodiment, each of the devices in the system environments 100, 200 can be monitored by a control device executing program code for the data monitoring module 418. Each control device in system environments 100, 200 can also be configured to monitor data from the same, fewer, or more of the devices in system environments 100, 200 such that each control device can receive data from each of the devices. In addition to devices, the data monitoring module 418 may also monitor data from other devices, such as control devices or other computing devices.

The data receiving module 420 can receive data from the devices. In one embodiment, a control device executing the data receiving module 420 can receive the data that were being monitored by the data monitoring module 418 at the control device. The data can include various data, text, signals, or other information that may be encoded for proper transmission throughout system environments 100, 200, e.g., via TCP/IP,UDP/IP, and/or any serial protocol. The data can be received at various predetermined rates, including every 10-, 20-, or 30-milliseconds. Devices can be configured to send data at the predetermined rates such that all data can be sent to the control devices simultaneously. The data can include various types of information. The data can be received via multicast according to certain embodiments herein.

The data sending module 422 can send output data from a control device, or other device executing the data sending module 422, to devices. The data sending module 422 can enable control devices to send output data to a subset or only certain ones of the devices in system environments 100, 200. For example, one control device can send output data to one subset of devices while another control device can send output data, e.g., the same output data, to another subset of devices. In this way, all of the devices can receive output data, albeit from different control devices in the above example. According to one embodiment, the devices can receive output data only from a particular control device, e.g., the control device to which it has been configured to listen. Additionally, the data sending module 422 can send output data to other control devices or computing devices. In one embodiment, the data received from the devices can be sent from a control device, e.g., as output data, to such other control devices or computing devices. In one embodiment, output data can be sent via multicast and can include, but are not limited to, various data, text, signals, or other information that may be encoded for proper transmission in system environments 100, 200, e.g., via TCP/IP protocol.

While certain embodiments of the disclosure have been described in connection with what is presently considered to be the most practical and various embodiments, it is to be understood that the disclosure is not to be limited to the disclosed embodiments, but on the contrary, is intended to cover various modifications and equivalent arrangements included within the scope of the appended claims. Although specific terms are employed herein, they are used in a generic and descriptive sense only and not for purposes of limitation.

This written description uses examples to disclose certain embodiments of the disclosure and also to enable any person skilled in the art to practice certain embodiments of the disclosure, including, but not limited to, making and using any devices or systems and performing any incorporated methods. The patentable scope of certain embodiments of the disclosure is defined in the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

Various aspects and embodiments of the present invention are defined by the following clauses:
1. A method comprising:
   receiving, by a computing device processor, a water injection flow reference comprising one or more conditions of a gas turbine system;
   receiving, by a computing device processor, water injection flow data from a sensor monitoring the gas turbine system;
   calculating, by a computing device processor, a water injection flow rate value that characterizes one or more conditions based at least in part on the water injection flow reference and the water injection flow data; and
   adjusting, by a computing device processor, a water injection flow rate of the gas turbine system to the calculated water injection flow rate value.
2. The method of clause 1, wherein calculating the water injection flow rate that characterizes one or more conditions comprises:
   calculating a water injection flow rate that increases power output of the gas turbine system.
3. The method of clause 1, wherein calculating the water injection flow rate that characterizes one or more conditions comprises:
   calculating a water injection flow rate that increases efficiency of the gas turbine system.
4. The method of clause 1, wherein calculating the water injection flow rate that characterizes one or more conditions comprises:
   calculating a water injection flow rate that decreases emissions of the gas turbine system.
5. The method of clause 1, wherein the water injection reference comprises one or more boundary limits defining a range of allowable water injection flow rate values.
6. The method of clause 5, wherein the one or more boundary limits comprise minimum and maximum water injection flow rate values, and wherein the minimum and maximum water injection flow rate values are calculated based at least in part on one or more conditions of the gas turbine system.
7. The method of clause 6, wherein the minimum water injection flow rate value corresponds to a maximum allowable amount of emissions produced by the gas turbine system.
8. The method of clause 1, wherein adjusting the water injection flow rate of the gas turbine system to the calculated water injection flow rate value is initiated by an onsite operator of the gas turbine system.
9. The method of clause 1, wherein the water injection flow rate of the gas turbine system is adjusted to the calculated water injection flow rate value for a predetermined period of time.
10. The method of clause 1, wherein the one or more conditions comprise at least one of a target power output, a target efficiency, a target amount of emissions, a power grid load demand, a grid frequency, a condition of one or more pieces of equipment in the gas turbine system, a temperature, a time of day, a day of week, and a geographic location.
11. A gas turbine system comprising:
   a combustion section;
   a water injection valve coupled to the combustion section; and
   at least one processor communicatively coupled to the combustion section and the water injection valve and configured to:
      receive a water injection flow reference comprising one or more conditions of the gas turbine system;
      receive water injection flow data from a sensor monitoring the gas turbine system;
      calculate a water injection flow rate value that characterizes one or more conditions based at least in part on the water injection flow reference and the water injection flow data; and
      adjust a water injection flow rate of the gas turbine system to the calculated water injection flow rate value.
12. The gas turbine system of clause 11, wherein calculating the water injection flow rate that characterizes one or more conditions comprises:
   calculating a water injection flow rate that increases power output of the gas turbine system.
13. The gas turbine system of clause 11, wherein calculating the water injection flow rate that characterizes one or more conditions comprises:
   calculating a water injection flow rate that increases efficiency of the gas turbine system.
14. The gas turbine system of clause 11, wherein calculating the water injection flow rate that characterizes one or more conditions comprises:
   calculating a water injection flow rate that decreases emissions of the gas turbine system.
15. The gas turbine system of clause 11, wherein the water injection reference comprises one or more boundary limits defining a range of allowable water injection flow rate values.
16. The gas turbine system of clause 15, wherein the one or more boundary limits comprise minimum and maximum water injection flow rate values, and wherein the minimum and maximum water injection flow rate values are calculated based at least in part on one or more conditions of the gas turbine system.
17. The gas turbine system of clause 16, wherein the minimum water injection flow rate value corresponds to a maximum allowable amount of emissions produced by the gas turbine system.
18. The gas turbine system of clause 11, wherein adjusting the water injection flow rate of the gas turbine system to the calculated water injection flow rate value is initiated by an onsite operator of the gas turbine system.
19. The gas turbine system of clause 11, wherein the water injection flow rate of the gas turbine system is adjusted to the calculated water injection flow rate value for a predetermined period of time.
20. A non-transitory computer readable medium including instructions stored thereon, which when executed by one or more processor(s), cause the device to perform operations of:
   receiving a water injection flow reference comprising one or more conditions of a system;
   receiving water injection flow data from a sensor monitoring the system;
   calculating a water injection flow rate value that characterizes one or more conditions based at least in part on the water injection flow reference and the water injection flow data; and
   adjusting a water injection flow rate of the system to the calculated water injection flow rate value.

## Claims

1. A method (300) comprising:
receiving (302), by a computing device processor (404), a water injection flow reference (120) comprising one or more conditions of a gas turbine system (100,200);
receiving (304), by a computing device processor (404), water injection flow data from a sensor (130) monitoring the gas turbine system (100,200);
calculating (306), by a computing device processor (404), a water injection flow rate value that characterizes one or more conditions based at least in part on the water injection flow reference (120) and the water injection flow data; and
adjusting (308), by a computing device processor (404), a water injection flow rate of the gas turbine system (100,200) to the calculated water injection flow rate value.

2. The method (300) of claim 1, wherein calculating (306) the water injection flow rate that characterizes one or more conditions comprises:
calculating (306) a water injection flow rate that increases power output of the gas turbine system (100,200).

3. The method (300) of claim 1, wherein calculating (306) the water injection flow rate that characterizes one or more conditions comprises:
calculating (306) a water injection flow rate that increases efficiency of the gas turbine system (100,200).

4. The method (300) of claim 1, wherein calculating (306) the water injection flow rate that characterizes one or more conditions comprises:
calculating (306) a water injection flow rate that decreases emissions of the gas turbine system (100,200).

5. The method (300) of claim 1, wherein the water injection reference (120) comprises one or more boundary limits defining a range of allowable water injection flow rate values.

6. A gas turbine system (100,200) comprising:
a combustion section;
a water injection valve (150) coupled to the combustion section; and
at least one processor (404) communicatively coupled to the combustion section and the water injection valve (150) and configured to:
receive (302) a water injection flow reference (120) comprising one or more conditions of the gas turbine system (100,200);
receive (304) water injection flow data from a sensor (130) monitoring the gas turbine system;
calculate (306) a water injection flow rate value that characterizes one or more conditions based at least in part on the water injection flow reference (120) and the water injection flow data; and
adjust (308) a water injection flow rate of the gas turbine system (100,200) to the calculated water injection flow rate value.

7. The gas turbine system (100,200) of claim 6, wherein calculating the water injection flow rate that characterizes one or more conditions comprises:
calculating a water injection flow rate that increases power output of the gas turbine system (100,200).

8. The gas turbine system (100, 200) of claim 6, wherein calculating the water injection flow rate that characterizes one or more conditions comprises:
calculating a water injection flow rate that increases efficiency of the gas turbine system (100,200).

9. The gas turbine system (100,200) of claim 6, wherein calculating the water injection flow rate that characterizes one or more conditions comprises:
calculating a water injection flow rate that decreases emissions of the gas turbine system (100,200).

10. The gas turbine system (100,200) of claim 6, wherein the water injection reference comprises one or more boundary limits defining a range of allowable water injection flow rate values.

11. The gas turbine system (100,200) of claim 6, wherein the one or more boundary limits comprise minimum and maximum water injection flow rate values, and wherein the minimum and maximum water injection flow rate values are calculated based at least in part on one or more conditions of the gas turbine system (100,200).

12. The gas turbine system (100,200) of claim 11, wherein the minimum water injection flow rate value corresponds to a maximum allowable amount of emissions produced by the gas turbine system.

13. The gas turbine system (100,200) of claim 6, wherein adjusting the water injection flow rate of the gas turbine system (100,200) to the calculated water injection flow rate value is initiated by an onsite operator of the gas turbine system (100,200).

14. The gas turbine system (100,200) of claim 6, wherein the water injection flow rate of the gas turbine system (100,200) is adjusted to the calculated water injection flow rate value for a predetermined period of time.

15. A non-transitory computer readable medium including instructions stored thereon, which when executed by one or more processor(s) (404), cause the device (100,200) to perform operations of:
receiving (302) a water injection flow reference (120) comprising one or more conditions of a system (100,200);
receiving (304) water injection flow data from a sensor (130) monitoring the system (100,200);
calculating (306) a water injection flow rate value that characterizes one or more conditions based at least in part on the water injection flow reference (120) and the water injection flow data; and
adjusting (308) a water injection flow rate of the system (100,200) to the calculated water injection flow rate value.
